# EUROPEAN PATENT SPECIFICATION

(11) **EP 3 753 847 B1**
(45) Date of publication and mention of the grant of the patent: **16.03.2022**
(21) Application number: 19793810.3
(22) Date of filing: 24.04.2019
(51) Int. Cl.: B64C 27/467

(54) **ROTARY-WING AIRCRAFT BLADE AIRFOIL, BLADE HAVING THE BLADE AIRFOIL, AND ROTARY-WING AIRCRAFT INCLUDING THE BLADE**
SCHAUFELBLATT EINES DREHFLÜGELFLUGZEUGES, SCHAUFEL MIT DIESEM SCHAUFELBLATT UND DREHFLÜGELFLUGZEUG MIT DIESEM SCHAUFELBLATT
PROFIL DE PALE D'AÉRONEF À VOILURE TOURNANTE, PALE COMPORTANT CE PROFIL ET AÉRONEF À VOILURE TOURNANTE COMPORTANT CETTE PALE

(30) Priority: 27.04.2018 JP 2018087368
(43) Date of publication of application: 23.12.2020
(73) Proprietor: Kawasaki Jukogyo Kabushiki Kaisha, Hyogo 650-8670 (JP)
(72) Inventor: YASUDA, Hidemasa, Kobe-shi Hyogo 650-8670 (JP); TSUJIUCHI, Tomoka, Kobe-shi Hyogo 650-8670 (JP); ABE, Akihito, Kobe-shi Hyogo 650-8670 (JP); OCHI, Akio, Kobe-shi Hyogo 650-8670 (JP)
(74) Representative: Leinweber & Zimmermann
(86) International application number: PCT/JP2019/017327
(87) International publication number: WO 2019/208602

(56) References cited:
- GB-A- 2 138 374
- JP-A- S5 695 799
- JP-A- 2010 514 601
- JP-B2- H0 717 236
- US-A- 4 412 664
- US-A- 4 459 083
- US-A- 4 776 531

## Description

### Technical Field

The present invention relates to a rotary-wing aircraft blade airfoil, a blade having the blade airfoil, and a rotary-wing aircraft (a rotor craft) including the blade.

### Background Art

The airfoil of an aircraft has a direct influence on the performance of the aircraft. Therefore, an airfoil design is regarded as an important design factor of the aircraft. Conventionally, various airfoils have been developed for different types of aircrafts, and also, airfoils dedicated for rotary-wing aircrafts (rotor crafts) have been under development.

A typical rotary-wing aircraft (rotor craft) is, for example, a helicopter. A helicopter moves upward by rotating its main rotor blades and generating lift. Therefore, in general, when designing the rotor blades, importance is attached to a lift coefficient (Cl). However, when the lift coefficient increases, it causes increase in a pitching moment coefficient and a pitch link load. If the pitch link load increases, vibration of the fuselage when the helicopter moves forward increases, which hinders favorable maneuverability of the helicopter. Consequently, the flying area of the helicopter may be limited, or there is a possibility that due to increased damage to the pitch link-related components, it may become necessary to replace the components more frequently.

In view of the above, a particular airfoil, for example, one disclosed by Patent Literature 1 or Patent Literature 2, has been proposed as a technology for reducing the pitching moment coefficient of a helicopter rotor blade.

In the case of the airfoil disclosed by Patent Literature 1, the upper surface of the airfoil has: a surface slope having a positive value and continuously decreasing from the leading edge of the airfoil to a position at approximately 35% chord, at which the slope becomes zero; a surface slope having a negative value and continuously decreasing from the position at approximately 35% chord to a position at approximately 70% chord; and a surface slope having a negative value and continuously increasing from the position at approximately 70% chord to the trailing edge of the airfoil. Also, in the case of the airfoil disclosed by Patent Literature 1, the lower surface of the airfoil has: a surface slope having a negative value and continuously increasing from the leading edge of the airfoil to a position at approximately 44% chord, at which the slope becomes zero; a surface slope having a positive value and continuously increasing from the position at approximately 44% chord to a position at approximately 65% chord; a surface slope having a positive value and continuously decreasing from the position at approximately 65% chord to a position at approximately 75% chord; and a surface slope having a positive value and continuously increasing from the position at approximately 75% chord to the trailing edge of the airfoil.

In the case of the airfoil disclosed by Patent Literature 2, the upper surface of the airfoil has: a surface slope having a positive value and continuously decreasing from the leading edge of the airfoil to a position at approximately 37% chord; a surface slope having a negative value and continuously decreasing from the position at approximately 37% chord to a position at approximately 70% chord; and a surface slope having a negative value and continuously increasing from the position at approximately 70% chord to the trailing edge of the airfoil. Also, in the case of the airfoil disclosed by Patent Literature 2, the lower surface of the airfoil has: a surface slope having a negative value and continuously increasing from the leading edge of the airfoil to a position at approximately 9% chord; a surface slope having a positive value and continuously increasing from the position at approximately 9% chord to a position at approximately 19% chord; a surface slope having a negative value and continuously decreasing from the position at approximately 19% chord to a position at approximately 42% chord; and a surface slope having a positive value and continuously increasing from the position at approximately 42% chord to the trailing edge of the airfoil.

Each of the airfoils disclosed by these Patent Literatures has a pitching moment coefficient close to zero. For example, in the case of the airfoil disclosed by Patent Literature 1, the pitching moment coefficient is close to zero near a Mach number of 0.8, and in the case of the airfoil disclosed by Patent Literature 2, the pitching moment coefficient is close to zero over a range of lift coefficients from 0.2 to 1.0 up to a Mach number of 0.64.

### Citation List

### Patent Literature

PTL 1: U.S. Patent No. 4412664
PTL 2: U.S. Patent No. 4776531

### Summary of Invention

### Technical Problem

When a helicopter flies forward at high speed, a shock wave acts on the advancing side of the main rotor blades. Accordingly, the drag on the main rotor blades increases, and as a result, the rotor torque increases. Such increase in the drag and rotor torque limits the flying range and the maximum speed of the helicopter. Therefore, in designing an airfoil for use in a rotor blade, it is also important to reduce a drag coefficient (Cd).

Each of the airfoils disclosed by Patent Literatures 1 and 2 is designed so as to bring the pitching moment coefficient close to zero, which makes it possible to reduce the pitch link load. However, these Patent Literatures do not give any specific descriptions about reducing the drag coefficient of the airfoils. Therefore, in the case of adopting blades having these airfoils as helicopter main rotor blades, even though the use of such airfoils makes it possible to suppress increase in the pitch link load, it is impossible to say definitely that the use of these airfoils brings improvements in terms of drag or rotor torque compared to other existing airfoils.

The present invention has been made to solve the above-described problems. An object of the present invention is to provide: an airfoil that makes it possible to reduce a drag coefficient when a rotary-wing aircraft, such as a helicopter, flies forward at high speed and to reduce a pitching moment coefficient acting on a blade of the rotary-wing aircraft; and a rotary-wing aircraft blade having the airfoil.

### Solution to Problem

In order to solve the above-described problems, a rotary-wing aircraft blade airfoil according to the present invention is a blade airfoil for use in a rotary-wing aircraft, in which it is assumed that: a position of a rear end of a chord of the airfoil with respect to a front end of the chord is 100% chord; a position of a blade upper surface, the position being measured from the chord, is an upper blade height; a position of a blade lower surface, the position being measured from the chord, is a lower blade height; and a sum of the upper blade height and the lower blade height is a blade thickness. The blade thickness of the airfoil satisfies a first airfoil condition, which is a condition that the blade thickness has its maximum value at a position within a range from 30% chord to 40% chord. A camber of the airfoil satisfies a second airfoil condition, which is a condition that the camber has its maximum value at a position within a range from 15% chord to 25% chord, and that a slope of the camber changes from decreasing into increasing at a position within a range from 45% chord to 55% chord. The upper blade height of the airfoil satisfies a third airfoil condition, which is a condition that the upper blade height has its maximum value at a position within a range from 25% chord to 35% chord. The lower blade height of the airfoil satisfies a fourth airfoil condition, which is a condition that the lower blade height has its maximum value at a position within a range from 35% chord to 45% chord.

The airfoil configured as described above satisfies all of the first to fourth airfoil conditions. Accordingly, the drag coefficient and the pitching moment coefficient of the airfoil can be reduced while keeping the lift coefficient of the airfoil at the same level as the conventional art. Therefore, a rotary-wing aircraft including a rotary-wing aircraft blade having the airfoil with the above-described configuration can effectively suppress increase in the drag and rotor torque acting on the blade when flying forward at high-speed.

This consequently makes it possible to increase the maximum limit speed of the rotary-wing aircraft. Moreover, the above configuration makes it possible to reduce the drag coefficient while keeping the lift coefficient, and thereby the lift-to-drag ratio can be increased, which makes it possible to extend the flying range of the rotary-wing aircraft including the blade having the airfoil. It should be noted that the camber is a curve that is formed by connecting between center points of the blade thickness in the chord direction. The camber is also called a mean camber curve, a mean camber line, or a center line.

The above and other objects, features, and advantages of the present invention will more fully be apparent from the following detailed description of a preferred embodiment with accompanying drawings.

### Advantageous Effects of Invention

The present invention is configured as described above, and has an advantage of being able to provide: an airfoil that makes it possible to reduce a drag coefficient when a rotary-wing aircraft, such as a helicopter, flies forward at high speed and to reduce a pitching moment coefficient acting on a blade of the rotary-wing aircraft; and a rotary-wing aircraft blade having the airfoil.

### Brief Description of Drawings

FIG. 1A is a schematic plan view showing a representative configuration example of a rotary-wing aircraft blade according to one embodiment; and FIG. 1B to FIG. ID are schematic diagrams each showing one example airfoil of a blade root portion, a middle portion, or a blade tip portion of the blade shown in FIG. 1A.
FIG. 2 is a schematic diagram showing a schematic configuration of a helicopter including the blade shown in FIG. 1A.
FIG. 3A to FIG. 3C are graphs showing comparison results between the blade thickness distributions of the airfoils shown in FIG. 1B to FIG. ID and the blade thickness distributions of conventional rotary-wing aircraft blade airfoils.
FIG. 4A is a graph showing comparison results between the airfoil shown in FIG. 1B and conventional airfoils, and FIG. 4B is a graph showing comparison results between the camber of the airfoil shown in FIG. 1B and the cambers of conventional airfoils.
FIG. 5A is a graph showing comparison results between the airfoil shown in FIG. 1C and conventional airfoils, and FIG. 5B is a graph showing comparison results between the camber of the airfoil shown in FIG. 1C and the cambers of conventional airfoils.
FIG. 6A is a graph showing comparison results between the airfoil shown in FIG. ID and conventional airfoils, and FIG. 6B is a graph showing comparison results between the camber of the airfoil shown in FIG. ID and the cambers of conventional airfoils.
FIG. 7A is a graph showing comparison results between the magnitude of the zerolift pitching moment coefficient of the airfoil shown in FIG. 1B and the magnitudes of the zerolift pitching moment coefficients of conventional airfoils; FIG. 7B is a graph showing comparison results between the zerolift drag coefficient of the airfoil shown in FIG. 1B and the zerolift drag coefficients of conventional airfoils; and FIG. 7C is a graph showing comparison results between the lift coefficient of the airfoil shown in FIG. 1B and the lift coefficients of conventional airfoils.
FIG. 8A is a graph showing comparison results between the magnitude of the zerolift pitching moment coefficient of the airfoil shown in FIG. 1C and the magnitudes of the zerolift pitching moment coefficients of conventional airfoils; FIG. 8B is a graph showing comparison results between the zerolift drag coefficient of the airfoil shown in FIG. 1C and the zerolift drag coefficients of conventional airfoils; and FIG. 8C is a graph showing comparison results between the lift coefficient of the airfoil shown in FIG. 1C and the lift coefficients of conventional airfoils.
FIG. 9A is a graph showing comparison results between the magnitude of the zerolift pitching moment coefficient of the airfoil shown in FIG. ID and the magnitudes of the zerolift pitching moment coefficients of conventional airfoils; FIG. 9B is a graph showing comparison results between the zerolift drag coefficient of the airfoil shown in FIG. ID and the zerolift drag coefficients of conventional airfoils; and FIG. 9C is a graph showing comparison results between the lift coefficient of the airfoil shown in FIG. 1D and the lift coefficients of conventional airfoils.

### Description of Embodiments

In order to solve the above-described problems, a rotary-wing aircraft blade airfoil according to the present invention is a blade airfoil for use in a rotary-wing aircraft, in which it is assumed that: a position of a rear end of a chord of the airfoil with respect to a front end of the chord is 100% chord; a position of a blade upper surface, the position being measured from the chord, is an upper blade height; a position of a blade lower surface, the position being measured from the chord, is a lower blade height; and a sum of the upper blade height and the lower blade height is a blade thickness. The blade thickness of the airfoil satisfies a first airfoil condition, which is a condition that the blade thickness has its maximum value at a position within a range from 30% chord to 40% chord. A camber of the airfoil satisfies a second airfoil condition, which is a condition that the camber has its maximum value at a position within a range from 15% chord to 25% chord, and that a slope of the camber changes from decreasing into increasing at a position within a range from 45% chord to 55% chord. The upper blade height of the airfoil satisfies a third airfoil condition, which is a condition that the upper blade height has its maximum value at a position within a range from 25% chord to 35% chord. The lower blade height of the airfoil satisfies a fourth airfoil condition, which is a condition that the lower blade height has its maximum value at a position within a range from 35% chord to 45% chord.

The airfoil configured as described above satisfies all of the first to fourth airfoil conditions. Accordingly, the drag coefficient and the pitching moment coefficient of the airfoil can be reduced while keeping the lift coefficient of the airfoil at the same level as the conventional art. Therefore, a rotary-wing aircraft including a rotary-wing aircraft blade having the airfoil with the above-described configuration can effectively suppress increase in the drag and rotor torque acting on the blade when flying forward at high-speed.

This consequently makes it possible to increase the maximum limit speed of the rotary-wing aircraft. Moreover, the above configuration makes it possible to reduce the drag coefficient while keeping the lift coefficient, and thereby the lift-to-drag ratio can be increased, which makes it possible to extend the flying range of the rotary-wing aircraft including the blade having the airfoil. It should be noted that the camber is a curve that is formed by connecting between center points of the blade thickness in the chord direction. The camber is also called a mean camber curve, a mean camber line, or a center line.

A rotary-wing aircraft blade according to the present invention is configured to include the airfoil with the above-described configuration. A rotary-wing aircraft according to the present invention is configured to include the rotary-wing aircraft blade with the above-described configuration.

Hereinafter, a representative embodiment is described with reference to the drawings. In the drawings, the same or corresponding elements are denoted by the same reference signs, and repeating the same descriptions is avoided below.

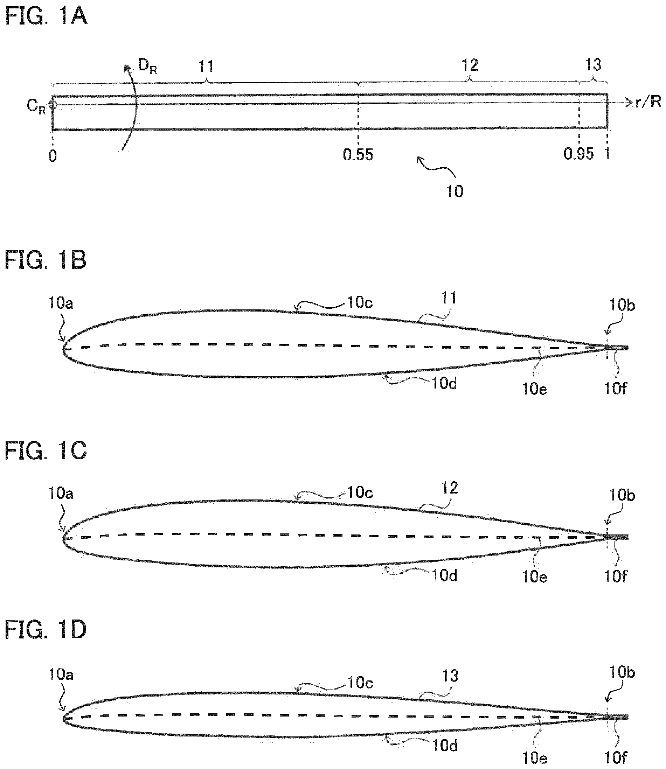

A rotary-wing aircraft blade according to the present disclosure (which may hereinafter be simply referred to as a "blade" as necessary) can be suitably used, for example, as a main rotor blade of a rotary-wing aircraft, such as a helicopter. As shown in FIG. 1A, the overall length of a blade 10 (blade width, blade length) with respect to a rotational center C_{R} of the blade 10 is r / R = 1. In this case, the rotational center C_{R} of the blade 10 is r / R = 0, and the tip of the blade 10 is r / R = 1. A portion from r /R = 0.55 to r / R = 0.95 is a middle portion 12 of the blade 10. A portion positioned at the tip side of the middle portion 12 is a blade tip portion 13 of the blade 10. A portion positioned at the rotational center side of the middle portion 12 is a blade root portion 11.

If the blade root portion 11, the middle portion 12, and the blade tip portion 13 are described in terms of blade width or length (span length), the blade root portion 11 is in a range from 0% span (the rotational center C_{R}) to 55% span; the middle portion 12 is in a range from 55% span to 95% span; and the blade tip portion 13 is in a range from 95% span to 100% span (the tip of the blade 10). It should be noted that the positions of the boundaries between the blade root portion 11, the middle portion 12, and the blade tip portion 13 are not particularly limited. In the present embodiment, for example, the boundaries may be set with respect to the middle portion 12 as follows: 0% span ≤ blade root portion 11 < 55% span; 55% span ≤ middle portion 12 ≤ 95% span; and 95% span < blade tip portion 13 ≤ 100% span.

The blade 10 according to the present disclosure is configured such that: the blade root portion 11 has an airfoil shown in FIG. 1B; the middle portion 12 has an airfoil shown in FIG. 1C; and the blade tip portion 13 has an airfoil shown in FIG. 1D. It should be noted that, in FIG. 1B to FIG. ID, a front end (leading edge) 10a of the blade 10 is shown on the left side of the drawing, and a rear end (trailing edge) 10b of the blade 10 is shown on the right side of the drawing. In each of FIGS. 1B to ID, the airfoil shown therein includes a tab 10f, which will be described below, and for the sake of convenience of the description, the position of the rear end 10b of the blade 10 is indicated by a dotted line in each of FIGS. 1B to ID. That is, the rear end 10b of the blade 10 is an end (an edge) without the tab 10f. In FIG. 1A, an arrow indicates a rotation direction D_{R} of the blade 10. The front end 10a is positioned at the head side of the arrow indicating the rotation direction D_{R}. That is, the rear end 10b is positioned at the other side of the arrow indicating the rotation direction D_{R}.

As previously mentioned, any position on the blade 10 in the longitudinal direction (see FIG. 1A) can be indicated by a blade width or length (span length). Similarly, in each of FIG. 1B to FIG. 1D, any position on the blade 10 in the front-rear direction (the direction orthogonal to the longitudinal direction) can be indicated by a proportion to a blade chord length (chord length). In this case, the front end 10a of the blade 10 is a position at 0% chord, and the rear end 10b of the blade 10 is a position at 100% chord.

In each of FIG. 1B to FIG. 1D, looking at the external surface (outer surface, surface, or outer peripheral surface) of the blade 10 (blade root portion 11, middle portion 12, or blade tip portion 13), the surface on the upper side of the drawing is a blade upper surface 10c of the blade 10, and the surface on the lower side of the drawing is a blade lower surface 10d of the blade 10. In each of FIG. 1B to FIG. ID, a camber line 10e is indicated by a dashed line from the front end 10a to the rear end 10b of the airfoil of the blade 10 (blade root portion 11, middle portion 12, or blade tip portion 13). It should be noted that the camber is a curve that is formed by connecting between center points of the blade thickness in the chord direction. The camber is also called a mean camber curve, a mean camber line, or a center line.

In the airfoil shown in each of FIG. 1B to FIG. ID, the blade chord (the chord) is not shown for the sake of convenience of illustration in order to show the camber line 10e. In the present embodiment, for each airfoil, the position of the blade upper surface 10c measured from the chord is assumed as an upper blade height. Similarly, for each airfoil, the position of the blade lower surface 10d measured from the chord is assumed as a lower blade height. The sum of the upper blade height and the lower blade height is the blade thickness.

It should be noted that, in the embodiment, the tab 10f is provided at the rear end 10b of the blade 10 as shown in FIG. 1B to FIG. 1D. The tab 10f is, for example, a plate-shaped portion that is provided for the convenience of manufacturing of the blade 10, or for trim tab adjustments of the blade 10. The size (the length in the front-rear direction), thickness, mounting angle, etc., of the tab 10f are not particularly limited. In the example shown in FIG. 1B to FIG. 1D, the tab 10f is provided on each of the blade root portion 11, the middle portion 12, and the blade tip portion 13, such that the mounting angle of the tab 10f is 0° (i.e., parallel to the camber line 10e) and the tab 10f has a length of 2 to 3% chord.

At least one of, and preferably all of, the blade root portion 11, the middle portion 12, and the blade tip portion 13 of the blade 10 according to the present disclosure have an airfoil that satisfies all of predetermined conditions regarding the blade thickness distribution, the camber, the upper blade height, and the lower blade height, i.e., the airfoil according to the present disclosure.

First, the condition regarding the blade thickness distribution is that the blade thickness has its maximum value at a position within a range from 30% chord to 40% chord of the airfoil. For the sake of convenience of the description, this condition is hereinafter referred to as the first airfoil condition. For the first airfoil condition, preferably, the blade thickness has its maximum value at a position within a range from 33% chord to 37% chord. A more preferable example of the first airfoil condition is that the blade thickness has its maximum value at a position near 35% chord (35% ± 1% chord). However, the first airfoil condition is not particularly limited, so long as the blade thickness has its maximum value at a position within the aforementioned range.

Next, the condition regarding the camber is that the camber has its maximum value at a position within a range from 15% chord to 25% chord of the airfoil, and that the slope of the camber changes from decreasing into increasing at a position within a range from 45% chord to 55% chord. For the sake of convenience of the description, this condition is hereinafter referred to as the second airfoil condition. For the second airfoil condition, preferably, the camber has its maximum value at a position within a range from 18% chord to 22% chord, and the slope of the camber changes from decreasing into increasing at a position within a range from 48% chord to 52% chord. A more preferable example of the second airfoil condition is that the camber has its maximum value at a position near 20% chord (20% ± 1% chord), and that the slope of the camber changes from decreasing into increasing at a position near 50% chord (50% ± 1% chord). However, the second airfoil condition is not particularly limited, so long as the camber has its maximum value at a position within the aforementioned range and the slope of the camber changes from decreasing into increasing at a position within the aforementioned range.

Next, the condition regarding the upper blade height is that the upper blade height has its maximum value at a position within a range from 25% chord to 35% chord of the airfoil. For the sake of convenience of the description, this condition is hereinafter referred to as the third airfoil condition. For the third airfoil condition, preferably, the upper blade height has its maximum value at a position within a range from 30% chord to 34% chord. A more preferable example of the third airfoil condition is that the upper blade height has its maximum value at a position near 32% chord (32% ± 1% chord). However, the third airfoil condition is not particularly limited, so long as the upper blade height has its maximum value at a position within the aforementioned range.

Next, the condition regarding the lower blade height is that the lower blade height has its maximum value at a position within a range from 35% chord to 45% chord of the airfoil. For the sake of convenience of the description, this condition is hereinafter referred to as the fourth airfoil condition. For the fourth airfoil condition, preferably, the lower blade height has its maximum value at a position within a range from 38% chord to 42% chord. A more preferable example of the fourth airfoil condition is that the lower blade height has its maximum value at a position near 40% chord (40% ± 1% chord). However, the fourth airfoil condition is not particularly limited, so long as the lower blade height has its maximum value at a position within the aforementioned range.

The blade 10 according to the present disclosure is required to have an airfoil that satisfies all of the first to fourth airfoil conditions. For example, in the longitudinal direction of the blade 10, a portion having an airfoil that satisfies the first to fourth airfoil conditions, and a portion having an airfoil that does not entirely satisfy the first to fourth airfoil conditions, may both exist. The shape of the blade 10 as seen in plan view (the shape of the blade 10 as seen from the blade upper surface side or blade lower surface side) is not particularly limited, so long as the blade 10 has an airfoil that satisfies the first to fourth airfoil conditions. In the present embodiment, the shape of the blade 10 as seen in plan view is rectangular as schematically shown in FIG. 1A. However, this is merely a non-limiting example. Examples of the shape of the blade 10 as seen in plan view include a shape in which the chord length changes in the longitudinal direction.

It should be noted that, in the present disclosure, preferably, among the blade root portion 11, the middle portion 12, and the blade tip portion 13 shown in FIG. 1A, the airfoil of at least the middle portion 12 satisfies all of the first to fourth airfoil conditions. More preferably, in addition to the airfoil of the middle portion 12, the airfoil of either the blade root portion 11 or the blade tip portion 13 satisfies the first to fourth airfoil conditions. Even more preferably, all of the airfoils of the blade root portion 11, the middle portion 12, and the blade tip portion 13 satisfy the first to fourth airfoil conditions.

In the blade 10 according to the present disclosure, in a case where each of the airfoil of the blade root portion 11, the airfoil of the middle portion 12, and the airfoil of the blade tip portion 13 satisfies the first to fourth airfoil conditions, the airfoils of these portions may be the same as or different from each other. Each of the airfoil of the blade root portion 11 shown in FIG. 1B, the airfoil of the middle portion 12 shown in FIG. 1C, and the airfoil of the blade tip portion 13 shown in FIG. ID satisfies all of the first to fourth airfoil conditions. However, as described below in Example, these airfoils are not the same, but different from each other. That is, a set of airfoils shown in FIG. 1B to FIG. 1D is merely one example of combination of preferred airfoils according to the present disclosure.

Airfoils according to the present disclosure (i.e., airfoils each satisfying the first to fourth airfoil conditions) include not only a reference airfoil that has a reference blade thickness distribution set in advance, but also a derivative airfoil that keeps the camber of the reference airfoil and has a varied blade thickness with a maximum value varied from the maximum value of the reference blade thickness. As one example, the airfoil of the middle portion 12 shown in FIG. 1C is assumed as a "reference airfoil", and the camber line 10e shown in FIG. 1C is assumed as a "reference camber". In a case where the maximum value of the reference blade thickness distribution (maximum blade thickness, blade thickness ratio) is, for example, 12% chord, the blade thickness distribution may be reduced uniformly, such that the blade thickness ratio is reduced to, for example, 10% chord. In this manner, a varied blade thickness distribution with a reduced blade thickness ratio of 0.10 can be obtained. By applying the varied blade thickness distribution, which has been thus reduced, to the reference camber, a derivative airfoil with a reduced blade thickness ratio can be obtained. It should be noted that the same is true also in the case of greatly changing the blade thickness ratio.

Generally speaking, main performance requirements that the airfoil of a blade for use in the main rotor of a helicopter need to satisfy are as follows: (1) a zerolift drag coefficient Cd0 of the airfoil is small and changes to a small degree in relation to Mach number; (2) the magnitude |Cm0| of a zerolift pitching moment coefficient of the airfoil is small and changes to a small degree in relation to Mach number; and (3) the airfoil is capable of obtaining a maximum lift coefficient Clmax, which is necessary in a low Mach number region. In particular, preferably, the airfoil satisfies both the performance requirements (1) and (2), which are performance requirements for being suitable for high-speed advancing. By satisfying the performance requirement (1), i.e., by making Cd0 small, the rotor torque can be reduced. By satisfying the performance requirement (2), i.e., by making |Cm0| small, the pitching link load can be reduced.

However, if |Cm0| is reduced, the performance requirement (3), i.e., Clmax, tends to be lowered. Generally speaking, importance is attached to improvement in hovering performance. Accordingly, importance is placed on increasing Clmax of the performance requirement (3). This results in increase in |Cm0|. Thus, there have been limitations to improving the high-speed advancing performance.

In this respect, the blade 10 according to the present disclosure has an airfoil that satisfies the above-described first to fourth airfoil conditions. The airfoil satisfying the first to fourth airfoil conditions (i.e., the airfoil according to the present disclosure) makes it possible to reduce Cd0 and also reduce |Cm0| while keeping Clmax at the same level as the conventional art. As a result, a rotary-wing aircraft including the blade 10 according to the present disclosure makes it possible to realize both favorable hovering performance and favorable high-speed advancing performance.

Therefore, the present disclosure encompasses not only the blade 10 having an airfoil that satisfies the first to fourth airfoil conditions, but also a rotary-wing aircraft (rotor craft) including the blade 10. The rotary-wing aircraft according to the present disclosure is not particularly limited. Examples of the rotary-wing aircraft include a helicopter, an autogyro (gyroplane or gyro), a compound helicopter, and a tilt-rotor aircraft. The rotary-wing aircraft according to the present disclosure may be an unmanned aircraft, such as a drone. In a case where the rotary-wing aircraft according to the present disclosure is a drone, the drone may be a general small-sized drone, or may be a large-sized drone that is as large as or almost as large as a manned rotary-wing aircraft.

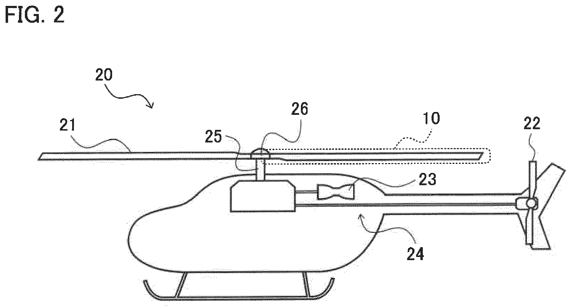

In the present embodiment, a specific description is given hereinafter by taking a helicopter as one example of the rotary-wing aircraft according to the present disclosure. As schematically shown in FIG. 2, a helicopter 20 according to the present disclosure includes a main rotor 21, a tail rotor 22, an engine 23, a motive power transmitter 24, etc. Motive power from the engine 23 is transmitted to the main rotor 21 and the tail rotor 22 via the motive power transmitter 24. A main gearbox serving as the motive power transmitter 24 supports one end of a main shaft 25, which is the rotary shaft of the main rotor 21. A hub 26 is provided at the other end of the main shaft 25. A blade 10 of the main rotor 21 is fixed to the hub 26. As previously described, the blade 10 is required to have an airfoil that satisfies the first to fourth airfoil conditions, and the shape of the blade 10 as seen in plan view (the chord length distribution in the longitudinal direction) is not particularly limited.

Since the helicopter 20 thus configured includes the blade 10 according to the present disclosure, when the helicopter 20 flies forward at high speed, increase in the drag and rotor torque acting on the blade 10 can be suppressed effectively, which consequently makes it possible to increase the maximum limit speed of the helicopter 20. Moreover, since the blade 10 according to the present disclosure makes it possible to reduce the drag coefficient while keeping the lift coefficient, the lift-to-drag ratio can be increased. This makes it possible to extend the flying range of the helicopter 20 according to the present disclosure.

It should be noted that, for example, more specific configurations, or manufacturing methods, of the blade 10 according to the present disclosure and the rotary-wing aircraft including the blade 10 are not particularly limited. The blade 10 can be manufactured by a known manufacturing method by using materials, components, structures, etc., that are known in the field of rotary-wing aircrafts, so long as the blade 10 has an airfoil that satisfies the first to fourth airfoil conditions. The same is true of the rotary-wing aircraft including the blade 10. The rotary-wing aircraft including the blade 10 can be manufactured by a known manufacturing method by using materials, components, structures, etc., that are known in the field of the helicopter 20 or other rotary-wing aircrafts.

### Examples

Hereinafter, a more specific description of the present invention is given based on Example and Comparative Examples. However, the present invention is not limited by the description below. A person skilled in the art can make various changes, modifications, and alterations without departing from the scope of the present invention.

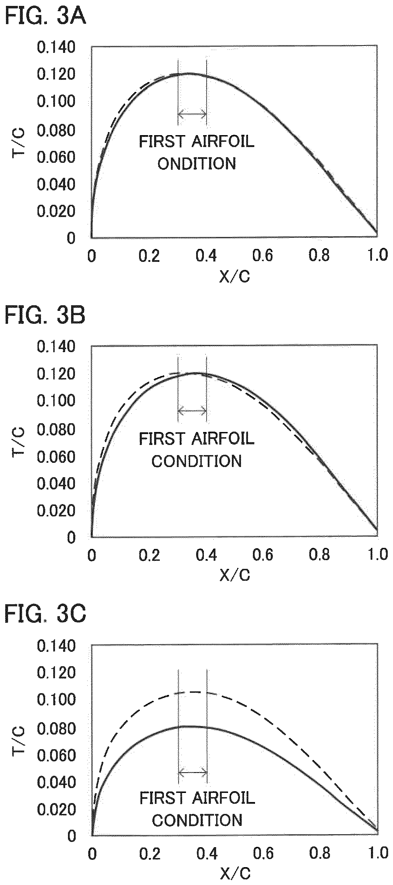

The blade thickness distributions of respective airfoils according to Example and Comparative Examples described below are shown in FIG. 3A to FIG. 3C, and these blade thickness distributions were compared with each other. It should be noted that, in each of FIG. 3A to FIG. 3C, the vertical axis represents a dimensionless blade thickness (T / C), and the horizontal axis represents a position (X / C) in the chord direction of the airfoil. T represents the blade thickness. X represents a coordinate value in the chord direction (front-rear direction). C represents the chord length.

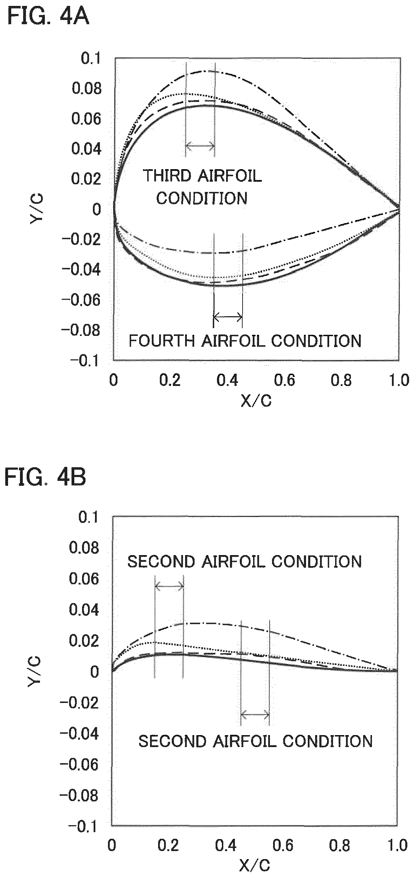

The blade upper surface and the blade lower surface of each airfoil are shown in FIG. 4A, FIG. 5A, or FIG. 6A, and the blade upper and lower surfaces of the airfoils were compared with each other. In each of FIG. 4A, FIG. 5A, and FIG. 6A, the vertical axis represents a position (Y / C) in the blade thickness direction of the airfoil, and the horizontal axis represents a position (X / C) in the chord direction of the airfoil. Y represents a coordinate value in the blade thickness direction.

The camber of each airfoil is shown in FIG. 4B, FIG. 5B, or FIG. 6B, and the cambers of the airfoils were compared with each other. In each of FIG. 4B, FIG. 5B, and FIG. 6B, the vertical axis represents the camber, and the horizontal axis represents a position (X / C) in the chord direction of the airfoil.

### (Example)

In the blade 10 according to the present Example, the airfoil of the blade root portion 11 was eKR120B shown in FIG. 1B; the airfoil of the middle portion 12 was eKR120A shown in FIG. 1C; and the airfoil of the blade tip portion 13 was eKR080A shown in FIG. ID.

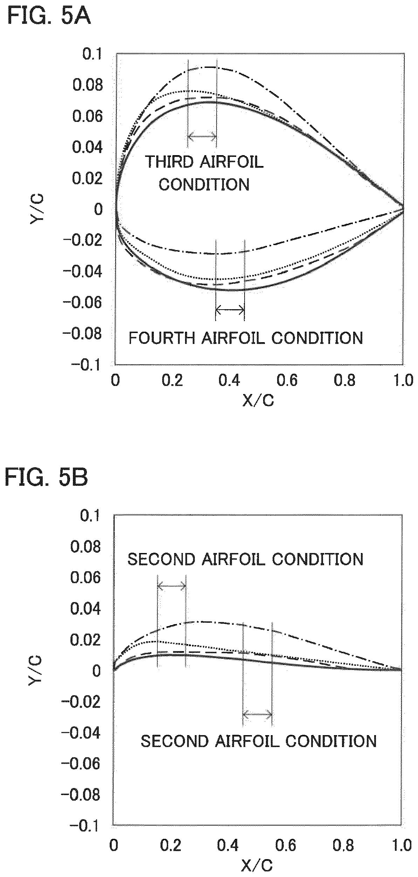

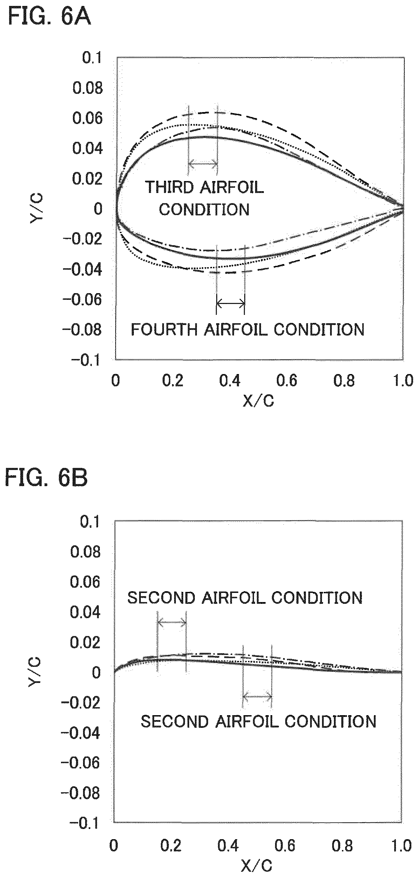

The blade thickness distribution of eKR120B is indicated by a solid line in FIG. 3A. The blade upper surface 10c and the blade lower surface 10d of eKR120B are each indicated by a solid line in FIG. 4A. The camber of eKR120B is indicated by a solid line in FIG. 4B. The blade thickness distribution of eKR120A is indicated by a solid line in FIG. 3B. The blade upper surface 10c and the blade lower surface 10d of eKR120B are each indicated by a solid line in FIG. 5A. The camber of eKR120B is indicated by a solid line in FIG. 5B. The blade thickness distribution of eKR080A is indicated by a solid line in FIG. 3C. The blade upper surface 10c and the blade lower surface 10d of eKR080A are each indicated by a solid line in FIG. 6A. The camber of eKR080A is indicated by a solid line in FIG. 6B.

The airfoils of the blade 10 according to the present Example were simulated by solving Reynolds-averaged Navier-Stokes equations by using the Spalart-Allmaras one-equation turbulence model, and changes in the magnitude |Cm0| of the zerolift pitching moment coefficient, changes in the zerolift drag coefficient Cd0, and changes in a lift coefficient Cl300 were calculated for each airfoil in relation to Mach number. It should be noted that Cl300 is the lift coefficient when Cd = 0.03, and can be regarded as being substantially equal to Clmax.

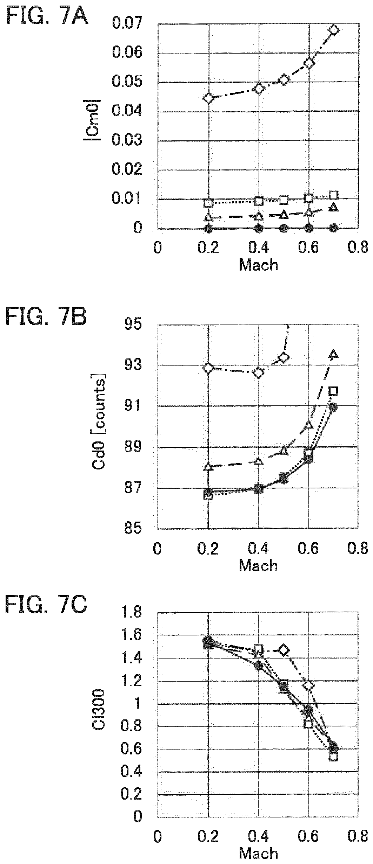

Results of the changes in |Cm0| of eKR120B are indicated by a solid line with black dot symbols in FIG. 7A. Results of the changes in Cd0 of eKR120B are indicated by a solid line with black dot symbols in FIG. 7B. Results of the changes in Cl300 of eKR210B are indicated by a solid line with black dot symbols in FIG. 7C. It should be noted that the reference point of the pitching moment is X / C = 0.25, Y / C = 0.

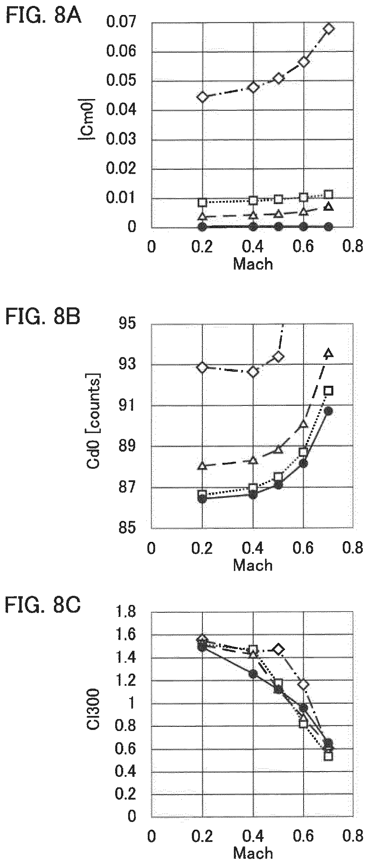

Also, Results of the changes in |Cm0| of eKR120A are indicated by a solid line with black dot symbols in FIG. 8A. Results of the changes in Cd0 of eKR120A are indicated by a solid line with black dot symbols in FIG. 8B. Results of the changes in Cl300 of eKR210A are indicated by a solid line with black dot symbols in FIG. 8C. It should be noted that in each of FIG. 7B, FIG. 8B, and FIG. 9B, Cd0 is indicated in unit of counts, and one count of Cd0 is 0.0001.

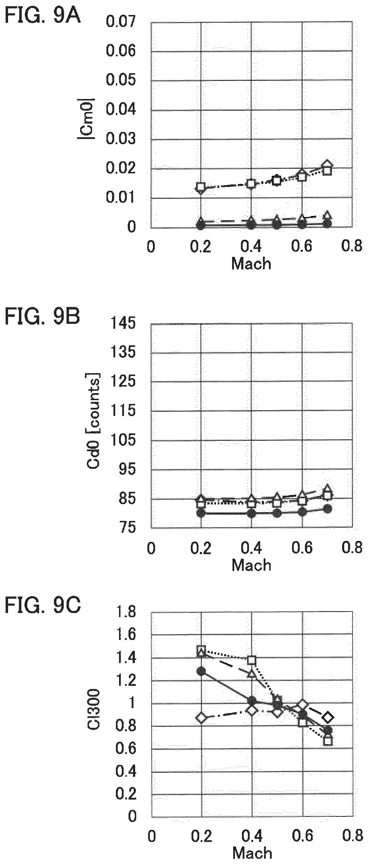

Also, Results of the changes in |Cm0| of eKR080A are indicated by a solid line with black dot symbols in FIG. 9A. Results of the changes in Cd0 of eKR080A are indicated by a solid line with black dot symbols in FIG. 9B. Results of the changes in Cl300 of eKR080A are indicated by a solid line with black dot symbols in FIG. 9C.

### (Comparative Example 1)

For the blade according to Comparative Example 1, DKR120C, which is an airfoil used for OH-1 (model name) manufactured by Kawasaki Heavy Industries, Ltd., was selected as the airfoil of each of the blade root portion 11 and the middle portion 12. Also, DKR105C, which is an airfoil used for the blade tip portion 13 of OH-1 (model name), was selected as the airfoil of the blade tip portion 13 of the blade according to Comparative Example 1.

The blade thickness distribution of DKR120C is indicated by a dashed line in FIG. 3A and FIG. 3B, and the blade thickness distribution of DKR105C is indicated by a dashed line in FIG. 3C. The blade upper surface 10c and the blade lower surface 10d of DKR120C are each indicated by a dashed line in FIG. 4A and FIG. 5A. The blade upper surface 10c and the blade lower surface 10d of DKR105C are each indicated by a dashed line in FIG. 6A. The camber of DKR120C is indicated by a dashed line in FIG. 4B and FIG. 5B. The camber of DKR105C is indicated by a dashed line in FIG. 6B.

The blade airfoils according to Comparative Example 1 were simulated in the same manner as in Example described above, and changes in the magnitude |Cm0| of the zerolift pitching moment coefficient, changes in the zerolift drag coefficient Cd0, and changes in the lift coefficient Cl300 were calculated for each airfoil in relation to Mach number.

Results of the changes in |Cm0| of DKR120C are indicated by a dashed line with black-outlined triangle symbols in FIG. 7A and FIG. 8A. Results of the changes in Cd0 of DKR120C are indicated by a dashed line with black-outlined triangle symbols in FIG. 7B and FIG. 8B. Results of the changes in Cl300 of DKR120C are indicated by a dashed line with black-outlined triangle symbols in FIG. 7C and FIG. 8C.

Results of the changes in |Cm0| of DKR105C are indicated by a dashed line with black-outlined triangle symbols in FIG. 9A. Results of the changes in Cd0 of DKR105C are indicated by a dashed line with black-outlined triangle symbols in FIG. 9B. Results of the changes in Cl300 of DKR105C are indicated by a dashed line with black-outlined triangle symbols in FIG. 9C.

### (Comparative Example 2)

For the blade according to Comparative Example 2, NACA23012, which is an airfoil used for Bo105 (model name) manufactured by Messerschmitt-Bölkow-Blohm (MBB), was selected as the airfoil of each of the blade root portion 11 and the middle portion 12. Also, SC1095, which is an airfoil used for UH-60 (model name) manufactured by Sikorsky Aircraft Corporation, was selected as the airfoil of the blade tip portion 13.

The blade upper surface 10c and the blade lower surface 10d of NACA23012 are each indicated by a dotted line in FIG. 4A and FIG. 5A. The blade upper surface 10c and the blade lower surface 10d of SC1095 are each indicated by a dotted line in FIG. 6A. The camber of NACA23012 is indicated by a dashed line in FIG. 4B and FIG. 5B. The camber of SC1095 is indicated by a dashed line in FIG. 6B.

The blade airfoils according to Comparative Example 2 were simulated in the same manner as in Example described above, and changes in the magnitude |Cm0| of the zerolift pitching moment coefficient, changes in the zerolift drag coefficient Cd0, and changes in the lift coefficient Cl300 were calculated for each airfoil in relation to Mach number.

Results of the changes in |Cm0| of NACA23012 are indicated by a dotted line with black-outlined square symbols in FIG. 7A and FIG. 8A. Results of the changes in Cd0 of NACA23012 are indicated by a dotted line with black-outlined square symbols in FIG. 7B and FIG. 8B. Results of the changes in Cl300 of NACA23012 are indicated by a dotted line with black-outlined square symbols in FIG. 7C and FIG. 8C.

Results of the changes in |Cm0| of SC1095 are indicated by a dotted line with black-outlined square symbols in FIG. 9A. Results of the changes in Cd0 of SC1095 are indicated by a dotted line with black-outlined square symbols in FIG. 9B. Results of the changes in Cl300 of SC1095 are indicated by a dotted line with black-outlined square symbols in FIG. 9C.

### (Comparative Example 3)

For the blade according to Comparative Example 3, VR7, which is an airfoil used for Vertol (model name) manufactured by The Boeing Company, was selected as the airfoil of each of the blade root portion 11 and the middle portion 12. VR8, which is also an airfoil used for Vertol (model name), was selected as the airfoil of the blade tip portion 13.

The blade upper surface 10c and the blade lower surface 10d of VR7 are each indicated by a one-dot chain line in FIG. 4A and FIG. 5A. The blade upper surface 10c and the blade lower surface 10d of VR8 are each indicated by a one-dot chain line in FIG. 6A. The camber of VR7 is indicated by a one-dot chain line in FIG. 4B and FIG. 5B. The camber of VR8 is indicated by a one-dot chain line in FIG. 6B.

The blade airfoils according to Comparative Example 3 were simulated in the same manner as in Example described above, and changes in the magnitude |Cm0| of the zerolift pitching moment coefficient, changes in the zerolift drag coefficient Cd0, and changes in the lift coefficient Cl300 were calculated for each airfoil in relation to Mach number.

Results of the changes in |Cm0| of VR7 are indicated by a one-dot chain line with black-outlined diamond-shaped symbols in FIG. 7A and FIG. 8A. Results of the changes in Cd0 of VR7 are indicated by a one-dot chain line with black-outlined diamond-shaped symbols in FIG. 7B and FIG. 8B. Results of the changes in Cl300 of VR7 are indicated by a one-dot chain line with black-outlined diamond-shaped symbols in FIG. 7C and FIG. 8C.

Results of the changes in |Cm0| of VR8 are indicated by a one-dot chain line with black-outlined diamond-shaped symbols in FIG. 9A. Results of the changes in Cd0 of VR8 are indicated by a one-dot chain line with black-outlined diamond-shaped symbols in FIG. 9B. Results of the changes in Cl300 of VR8 are indicated by a one-dot chain line with black-outlined diamond-shaped symbols in FIG. 9C.

### (Comparison between Example and Comparative Examples)

As indicated by a solid line and FIRST AIRFOIL CONDITION in each of FIG. 3A to FIG. 3C, in the case of the blade 10 according to the present Example, all of the blade thickness distributions of the airfoil eKR120B of the blade root portion 11, the airfoil eKR120A of the middle portion 12, and the airfoil eKR080A of the blade tip portion 13 (see FIG. 1B to FIG. ID) satisfy the first airfoil condition.

On the other hand, in the case of the blade airfoils according to Comparative Example 1 each indicated by a dashed line in FIG. 3A or FIG. 3B, the peak of the blade thickness of the airfoil DKR120C is present on the front end side, thus not satisfying the first airfoil condition.

As indicated by solid lines, THIRD AIRFOIL CONDITION, and FOURTH AIRFOIL CONDITION in each of FIG. 4A, FIG. 5A, and FIG. 6A, in the case of the blade 10 according to the present Example, all of the upper blade heights of the airfoil eKR120B of the blade root portion 11, the airfoil eKR120A of the middle portion 12, and the airfoil eKR080A of the blade tip portion 13 satisfy the third airfoil condition, and all of the lower blade heights of the airfoil eKR120B of the blade root portion 11, the airfoil eKR120A of the middle portion 12, and the airfoil eKR080A of the blade tip portion 13 satisfy the fourth airfoil condition. Similarly, as indicated by a solid line and SECOND AIRFOIL CONDITION in each of FIG. 4B, FIG. 5B, and FIG. 6B, in the case of the blade 10 according to the present Example, all of the cambers of the airfoil eKR120B of the blade root portion 11, the airfoil eKR120A of the middle portion 12, and the airfoil eKR080A of the blade tip portion 13 satisfy the second airfoil condition.

On the other hand, none of the blade airfoils according to Comparative Example 1 indicated by dashed lines, the blade airfoils according to Comparative Example 2 indicated by dotted lines, and the blade airfoils according to Comparative Example 3 indicated by one-dot chain lines satisfy two of, or all of, the second to fourth airfoil conditions.

Moreover, as indicated by a solid line with black dot symbols in each of FIG. 7A, FIG. 8A, and FIG. 9A, in the case of the airfoils of the blade 10 according to the present Example, all of the airfoil eKR120B of the blade root portion 11, the airfoil eKR120A of the middle portion 12, and the airfoil eKR080A of the blade tip portion 13 exhibit a sufficiently small magnitude |Cm0| of the zerolift pitching moment coefficient in relation to Mach number.

On the other hand, the blade airfoils according to Comparative Examples 1 to 3, each of which is indicated by a dashed line, dotted line, or one-dot chain line with black-outlined symbols, clearly exhibit a greater magnitude |Cm0| than that of the present Example.

Furthermore, as indicated by a solid line with black dot symbols in each of FIG. 7B, FIG. 8B, and FIG. 9B, in the case of the blade 10 according to the present Example, all of the airfoil eKR120B of the blade root portion 11, the airfoil eKR120A of the middle portion 12, and the airfoil eKR080A of the blade tip portion 13 exhibit a sufficiently small zerolift drag coefficient Cd0.

On the other hand, the blade airfoils according to Comparative Examples 1 to 3, each of which is indicated by a dashed line, dotted line, or one-dot chain line with black-outlined symbols, clearly exhibit a greater Cd0 than that of the present Example, except that the airfoil NACA23012 of Comparative Example 2 shown in FIG. 7B (indicated by a dotted line with black-outlined square symbols) exhibits a similar level of Cd0 to that of the airfoil eKR120B of the present Example at low Mach numbers. It should be noted that the airfoil NACA23012 of Comparative Example 2 exhibits a greater Cd0 than that of the airfoil eKR120B of the present Example at high Mach numbers.

Further, as indicated by a solid line with black dot symbols in each of FIG. 7C, FIG. 8C, and FIG. 9C, in the case of the airfoils of the blade 10 according to the present Example, all of the lift coefficients C1300 of the airfoil eKR120B of the blade root portion 11, the airfoil eKR120A of the middle portion 12, and the airfoil eKR080A of the blade tip portion 13 achieve similar numerical values to those of the lift coefficients Cl300 of the airfoils according to Comparative Examples 1 to 3, each of which is indicated by a dashed line, dotted line, or one-dot chain line with black-outlined symbols.

As described above, the rotary-wing aircraft blade according to the present disclosure has an airfoil that satisfies all of the first to fourth airfoil conditions. Accordingly, the drag coefficient and the pitching moment coefficient of the blade can be reduced while keeping the lift coefficient of the blade at the same level as the conventional art. Therefore, a rotary-wing aircraft including such a blade can effectively suppress increase in the drag and rotor torque acting on the blade when flying forward at high-speed. This consequently makes it possible to increase the maximum limit speed of the rotary-wing aircraft. Moreover, the blade according to the present disclosure makes it possible to reduce the drag coefficient while keeping the lift coefficient, and thereby the lift-to-drag ratio can be increased, which makes it possible to extend the flying range of the rotary-wing aircraft including the blade according to the present disclosure.

As described above, the rotary-wing aircraft blade airfoil according to the present disclosure is a blade airfoil for use in a rotary-wing aircraft, in which it is assumed that: a position of a rear end of a chord of the airfoil with respect to a front end of the chord is 100% chord; a position of a blade upper surface, the position being measured from the chord, is an upper blade height; a position of a blade lower surface, the position being measured from the chord, is a lower blade height; and a sum of the upper blade height and the lower blade height is a blade thickness. The blade thickness of the airfoil satisfies a first airfoil condition, which is a condition that the blade thickness has its maximum value at a position within a range from 30% chord to 40% chord. A camber of the airfoil satisfies a second airfoil condition, which is a condition that the camber has its maximum value at a position within a range from 15% chord to 25% chord, and that a slope of the camber changes from decreasing into increasing at a position within a range from 45% chord to 55% chord. The upper blade height of the airfoil satisfies a third airfoil condition, which is a condition that the upper blade height has its maximum value at a position within a range from 25% chord to 35% chord. The lower blade height of the airfoil satisfies a fourth airfoil condition, which is a condition that the lower blade height has its maximum value at a position within a range from 35% chord to 45% chord.

The airfoil configured as described above satisfies all of the first to fourth airfoil conditions. Accordingly, the drag coefficient and the pitching moment coefficient of the airfoil can be reduced while keeping the lift coefficient of the airfoil at the same level as the conventional art. Therefore, a rotary-wing aircraft including a rotary-wing aircraft blade having the airfoil with the above-described configuration can effectively suppress increase in the drag and rotor torque acting on the blade when flying forward at high-speed.

This consequently makes it possible to increase the maximum limit speed of the rotary-wing aircraft. Moreover, the above configuration makes it possible to reduce the drag coefficient while keeping the lift coefficient, and thereby the lift-to-drag ratio can be increased, which makes it possible to extend the flying range of the rotary-wing aircraft including the blade having the airfoil. It should be noted that the camber is a curve that is formed by connecting between center points of the blade thickness in the chord direction. The camber is also called a mean camber curve, a mean camber line, or a center line.

In the rotary-wing aircraft blade airfoil with the above-described configuration, the first airfoil condition may be a condition that the blade thickness has its maximum value at a position within a range from 33% chord to 37% chord. The second airfoil condition may be a condition that the camber has its maximum value at a position within a range from 18% chord to 22% chord, and that the slope of the camber changes from decreasing into increasing at a position within a range from 48% chord to 52% chord. The third airfoil condition may be a condition that the upper blade height has its maximum value at a position within a range from 30% chord to 34% chord. The fourth airfoil condition may be a condition that the lower blade height has its maximum value at a position within a range from 38% chord to 42% chord.

In the rotary-wing aircraft blade airfoil with the above-described configuration, a plate-shaped tab may be provided at a rear end of the airfoil.

A rotary-wing aircraft blade according to the present invention is configured to include the airfoil with the above-described configuration. A rotary-wing aircraft according to the present invention is configured to include the rotary-wing aircraft blade with the above-described configuration. The rotary-wing aircraft according to the present invention is not limited to a particular type of rotary-wing aircraft. For example, the rotary-wing aircraft according to the present invention may be a helicopter.

It should be noted that the present invention is not limited to the embodiment described above, and various modifications can be made within the scope of Claims. Embodiments obtained by suitably combining technical means that are disclosed in different embodiments and variations also fall within the technical scope of the present invention.

From the foregoing description, numerous modifications and other embodiments of the present invention are obvious to a person skilled in the art. Therefore, the foregoing description should be interpreted only as an example and is provided for the purpose of teaching the best mode for carrying out the present invention to a person skilled in the art. The structural and/or functional details may be substantially altered without departing from the scope of the present invention, which is defined by the appended claims.

### Industrial Applicability

The present invention is widely and suitably applicable in the field of rotary-wing aircrafts and blades included therein, the rotary-wing aircrafts being typified by helicopters.

### Reference Signs List

- 10:: blade
- 10a:: front end of the blade
- 10b:: rear end of the blade
- 10c:: blade upper surface of the blade
- 10d:: blade lower surface of the blade
- 10e:: camber line
- 10f:: tab
- 11:: blade root portion of the blade
- 12:: middle portion of the blade
- 13:: blade tip portion of the blade
- 20:: helicopter (rotary-wing aircraft)
- 21:: main rotor
- 22:: tail rotor
- 23:: engine
- 24:: motive power transmitter
- 25:: main shaft
- 26:: hub

## Claims

1. A rotary-wing aircraft blade airfoil that is a blade airfoil for use in a rotary-wing aircraft, wherein, assuming that: a position of a rear end of a chord of the airfoil with respect to a front end of the chord is 100% chord; a position of a blade upper surface, the position being measured from the chord, is an upper blade height; a position of a blade lower surface, the position being measured from the chord, is a lower blade height; and a sum of the upper blade height and the lower blade height is a blade thickness,
the blade thickness of the airfoil satisfies a first airfoil condition, which is a condition that the blade thickness has its maximum value at a position within a range from 30% chord to 40% chord,
a camber of the airfoil satisfies a second airfoil condition, which is a condition that the camber has its maximum value at a position within a range from 15% chord to 25% chord,
the upper blade height of the airfoil satisfies a third airfoil condition, which is a condition that the upper blade height has its maximum value at a position within a range from 25% chord to 35% chord, and
the lower blade height of the airfoil satisfies a fourth airfoil condition, which is a condition that the lower blade height has its maximum value at a position within a range from 35% chord to 45% chord
**characterised in that** in the second airfoil condition a slope of the camber changes from decreasing into increasing at a position within a range from 45% chord to 55% chord.

2. The rotary-wing aircraft blade airfoil according to claim 1, wherein
the first airfoil condition is a condition that the blade thickness has its maximum value at a position within a range from 33% chord to 37% chord,
the second airfoil condition is a condition that the camber has its maximum value at a position within a range from 18% chord to 22% chord, and that the slope of the camber changes from decreasing into increasing at a position within a range from 48% chord to 52% chord,
the third airfoil condition is a condition that the upper blade height has its maximum value at a position within a range from 30% chord to 34% chord, and
the fourth airfoil condition is a condition that the lower blade height has its maximum value at a position within a range from 38% chord to 42% chord.

3. The rotary-wing aircraft blade airfoil according to claim 1 or 2, wherein
a plate-shaped tab is provided at a rear end of the airfoil.

4. A rotary-wing aircraft blade comprising the airfoil according to any one of claims 1 to 3.

5. A rotary-wing aircraft comprising the rotary-wing aircraft blade according to claim 4.

6. The rotary-wing aircraft according to claim 5, wherein
the rotary-wing aircraft is a helicopter.

## Patentansprüche

1. Aerodynamisches Profil eines Rotorblatts eines Drehflügelflugzeugs, das ein aerodynamisches Profil eines Rotorblatts zur Verwendung in einem Drehflügelflugzeug ist, wobei unter der Annahme, dass: eine Position eines hinteren Endes der Sehne des aerodynamischen Profils in Bezug auf ein vorderes Ende der Sehne 100 % der Sehne beträgt, eine Position einer Rotorblattoberseite, wobei die Position von der Sehne aus gemessen wird, eine obere Rotorblatthöhe ist; eine Position einer Rotorblattunterseite, wobei die Position von der Sehne aus gemessen wird, eine untere Rotorblatthöhe ist; und eine Summe der oberen Rotorblatthöhe und der unteren Rotorblatthöhe eine Rotorblattdicke ist,
die Rotorblattdicke des aerodynamischen Profils eine erste Profilbedingung erfüllt, bei der es sich um eine Bedingung handelt, dass die Rotorblattdicke ihren Maximalwert an einer Position innerhalb eines Bereichs von 30 % der Sehne bis 40 % der Sehne aufweist,
eine Skelettlinie des aerodynamischen Profils eine zweite Profilbedingung erfüllt, bei der es sich um eine Bedingung handelt, dass die Skelettlinie ihren Maximalwert an einer Position innerhalb eines Bereichs von 15 % der Sehne bis 25 % der Sehne aufweist,
die obere Rotorblatthöhe des aerodynamischen Profils eine dritte Profilbedingung erfüllt, bei der es sich um eine Bedingung handelt, dass die obere Rotorblatthöhe ihren Maximalwert an einer Position innerhalb eines Bereichs von 25 % der Sehne bis 35 % der Sehne aufweist, und die untere Rotorblatthöhe des aerodynamischen Profils eine vierte Profilbedingung erfüllt, bei der es sich um eine Bedingung handelt, dass die untere Rotorblatthöhe ihren Maximalwert an einer Position innerhalb eines Bereichs von 35 % der Sehne bis 45 % der Sehne aufweist,
**dadurch gekennzeichnet, dass** in der zweiten Profilbedingung eine Steigung der Skelettlinie von einer Abnahme zu einer Zunahme an einer Position innerhalb eines Bereichs von 45 % der Sehne bis 55 % der Sehne wechselt.

2. Aerodynamisches Profil eines Rotorblatts eines Drehflügelflugzeugs nach Anspruch 1, wobei
es sich bei der ersten Profilbedingung um eine Bedingung handelt, dass die Rotorblattdicke ihren Maximalwert an einer Position innerhalb eines Bereichs von 33 % der Sehne bis 37 % der Sehne aufweist,
es sich bei der zweiten Profilbedingung um eine Bedingung handelt, dass die Skelettlinie ihren Maximalwert an einer Position innerhalb eines Bereichs von 18 % der Sehne bis 22 % der Sehne aufweist, und dass eine Steigung der Skelettlinie von einer Abnahme zu einer Zunahme an einer Position innerhalb eines Bereichs von 48 % der Sehne bis 52 % der Sehne wechselt,
es sich bei der dritten Profilbedingung um eine Bedingung handelt, dass die obere Rotorblatthöhe ihren Maximalwert an einer Position innerhalb eines Bereichs von 30 % der Sehne bis 34 % der Sehne aufweist, und
es sich bei der vierten Profilbedingung um eine Bedingung handelt, dass die untere Rotorblatthöhe ihren Maximalwert an einer Position innerhalb eines Bereichs von 38 % der Sehne bis 42 % der Sehne aufweist.

3. Aerodynamisches Profil eines Rotorblatts eines Drehflügelflugzeugs nach Anspruch 1 oder 2, wobei
an einem hinteren Ende des aerodynamischen Profils eine plattenförmige Lasche vorgesehen ist.

4. Rotorblatts eines Drehflügelflugzeugs, das das aerodynamische Profil nach einem der Ansprüche 1 bis 3 umfasst.

5. Drehflügelflugzeug, das das Rotorblatt eines Drehflügelflugzeugs nach Anspruch 4 umfasst.

6. Drehflügelflugzeug nach Anspruch 5, wobei
es sich bei dem Drehflügelflugzeug um einen Hubschrauber handelt.

## Revendications

1. Profil aérodynamique de pale pour aéronef à voilure tournante consistant en un profil aérodynamique de pale destiné à être utilisé dans un aéronef à voilure tournante, dans lequel, en supposant que : la position d'une extrémité arrière de la corde du profil par rapport à une extrémité avant de la corde constitue 100 % de la corde ; la position de la surface supérieure de la pale, mesurée à partir de la corde, constitue la hauteur supérieure de la pale ; la position de la surface inférieure de la pale, mesurée à partir de la corde, constitue la hauteur inférieure de la pale ; et la somme de la hauteur supérieure de la pale et de la hauteur inférieure de la pale constitue l'épaisseur de pale,
l'épaisseur de pale du profil satisfait une première condition de profil, selon laquelle condition l'épaisseur de pale est à sa valeur maximale en un emplacement compris dans la plage allant de 30 % de la corde à 40 % de la corde,
la ligne de cambrure du profil satisfait une deuxième condition de profil, selon laquelle condition la ligne de cambrure est à sa valeur maximale en un emplacement compris dans la plage allant de 15 % de la corde à 25 % de la corde,
la hauteur supérieure de la pale du profil satisfait une troisième condition de profil, selon laquelle condition la hauteur supérieure de la pale est à sa valeur maximale en un emplacement compris dans la plage allant de 25 % de la corde à 35 % de la corde, et
la hauteur inférieure de la pale du profil satisfait une quatrième condition de profil, selon laquelle condition la hauteur inférieure de la pale est à sa valeur maximale en un emplacement compris dans la plage allant de 35 % de la corde à 45 % de la corde,
**caractérisé en ce que**, dans le cadre de la deuxième condition de profil, la pente de la ligne de cambrure passe d'une diminution à une augmentation en un emplacement compris dans la plage allant de 45 % de la corde à 55 % de la corde.

2. Profil aérodynamique de pale pour aéronef à voilure tournante selon la revendication 1, dans lequel
la première condition de profil est une condition selon laquelle l'épaisseur de pale est à sa valeur maximale en un emplacement compris dans la plage allant de 33 % de la corde à 37 % de la corde,
la deuxième condition de profil est une condition selon laquelle la ligne de cambrure est à sa valeur maximale en un emplacement compris dans la plage allant de 18 % de la corde à 22 % de la corde, et selon laquelle la pente de la ligne de cambrure passe d'une diminution à une augmentation en un emplacement compris dans la plage allant de 48 % de la corde à 52 % de la corde,
la troisième condition de profil est une condition selon laquelle la hauteur supérieure de la pale est à sa valeur maximale en un emplacement compris dans la plage allant de 30 % de la corde à 34 % de la corde, et
la quatrième condition de profil est une condition selon laquelle la hauteur inférieure de la pale est à sa valeur maximale en un emplacement compris dans la plage allant de 38 % de la corde à 42 % de la corde.

3. Profil aérodynamique de pale pour aéronef à voilure tournante selon la revendication 1 ou 2, dans lequel
une languette en forme de plaque est prévue à une extrémité arrière du profil aérodynamique.

4. Pale pour aéronef à voilure tournante comprenant le profil aérodynamique selon l'une quelconque des revendications 1 à 3.

5. Aéronef à voilure tournante comprenant la pale pour aéronef à voilure tournante selon la revendication 4.

6. Aéronef à voilure tournante selon la revendication 5, dans lequel
l'aéronef à voilure tournante est un hélicoptère.
